# EUROPÄISCHE PATENTANMELDUNG

(11) **EP 3 181 317 A1**
(43) Veröffentlichungstag der Anmeldung: **21.06.2017**
(21) Anmeldenummer: 15201214.2
(22) Anmeldetag: 18.12.2015
(51) Int. Cl.: B29B 9/06, B29B 9/12, B29C 47/00, C08G 69/00

(54) **VERFAHREN ZUR HERSTELLUNG VON FESTSTOFFPARTIKELN**

(71) Anmelder: LANXESS Deutschland GmbH, 50569 Köln (DE)
(72) Erfinder: WITT, Michael, Dr., 95488 Eckersdorf (DE); CASPERS, Nikolaj, 51377 Leverkusen (DE); SZCZECINA, Ulrich-Peter, 51375 Leverkusen (DE)

(57) **Zusammenfassung**

Verfahren zur Herstellung von Feststoffpartikeln, enthaltend ein Material mit einem Schmelzpunkt bei Normaldruck von -20°C bis +300°C, dadurch gekennzeichnet, dass man eine Mischung enthaltend:
a1) das Material in geschmolzener Form und
a2) das Material in fester Form
mittels eines Extruders zu einer Paste vermischt, diese durch eine Lochplatte zu Strängen presst und die Stränge zerkleinert.

## Beschreibung

Die Erfindung betrifft ein Verfahren zur Herstellung von Feststoffpartikeln eines Materials mit speziellem Schmelzpunkt durch Extrusion einer zweiphasigen Mischung, enthaltend dieses Material und anschließender Zerkleinerung.

Viele niedermolekulare Verbindungen zeichnen sich durch einen definierten Schmelzpunkt aus, bei dem der Feststoff in eine niedrigviskose Schmelze (< 1·10⁴ Pa·s) übergeht.

Eine derartige niedrigviskose Schmelze kann auf konventionellen Compoundieranlagen, die im Wesentlichen aus einem Extruder und einer Granuliereinheit bestehen, nicht verarbeitet werden.

Diese Problematik wird am Beispiel von monomerem Caprolactam näher beschrieben:
Monomeres Caprolactam wird heute sowohl im aufgeschmolzenen Zustand als auch als Feststoff ver-kauft.

Für den Transport von kleineren Mengen an Caprolactam oder den Transport über längere Ent-fernungen wird der Feststoff bevorzugt.

Insbesondere für die anionische Caprolactampolymerisation kann es vorteilhaft sein, in Caprolactam Feststoff-Partikeln bereits den Aktivator und/oder den Katalysator einzuarbeiten, um auf diese Weise lagerfähige Instantmischungen für die anionische Caprolactampolymerisation bereitzustellen.

Ein derartiges Konzept beschreibt die WO2013/034499.

Ein etabliertes Verfahren zur Herstellung von erstarrtem Caprolactam, welches in Tüten abgepackt und auf Paletten transportiert werden kann, basiert auf gekühlten Walzen, deren Unterseite in einen Caprolactam Schmelzepool eintauchen. Während einer Umdrehung dieser gekühlten Walzen friert das Caprolactam als Oberflächenschicht aus, die dann von einem Messer abgeschabt wird. Es resultieren Caprolactam Schuppen, deren Dicke über die Temperatur des Schmelzepools, der Umdrehungsgeschwindigkeit und der Kühlleistung variiert werden kann.

Derartige Caprolactam Schuppen haben den Nachteil, relativ viel Feinanteil zu enthalten und die flächigen Schuppen neigen darüber hinaus beim Transport zum Verkleben. Insbesondere zeigen derartige Schuppen nach dem Transport zum Kunden bei der sich anschließenden betrieblichen Weiterverarbeitung oft Probleme bei der Verwendung von Saugförderanlagen oder beim Einzug in Schneckenförderungen.

Gleiche Nachteile gelten für die in WO2013/034499 beschriebenen Instantmischungen, wenn diese als Schuppenware hergestellt wurden.

In der BP 1390971 wird ein Verfahren zur Herstellung gut rieselfähiger Caprolactam Feststoffpartikel beschrieben, welches im Wesentlichen darauf beruht, dass geschmolzenes Caprolactam über Düsen in eine Caprolactam-Feststoff-Wirbelschicht eingetragen wird. Auf diese Weise können sphärische Partikel mit verbesserter Rieselfähigkeit produziert werden, die beim Transport weniger verkleben und die besser weiterverarbeitet werden können.

Nachteil an dem in der BP 1390971 beschriebenen Verfahren ist, dass dieses Verfahren einen hohen Aufwand in Bezug auf die Inertisierung der Wirbelschicht und in Bezug auf die Regelung von Durch-satz und Partikelgröße erfordert.

### Stellung der Aufgabe

Es wurde folglich nach einem Verfahren gesucht, das eine einfache, robuste, kostengünstige Herstellung von Feststoffpartikeln ermöglicht, bei dem die genannten Nachteile des Standes der Technik vermieden werden.

Es wurde nun ein Verfahren zur Herstellung von Feststoffpartikeln, enthaltend ein Material mit einem Schmelzpunkt bei Normaldruck von -20 bis 300 °C gefunden, dadurch gekennzeichnet, dass man eine Mischung enthaltend:
a1) das Material in geschmolzener Form und
a2) das Material in fester Form
mittels eines Extruders zu einer Paste vermischt, diese durch eine Lochplatte zu Strängen presst und die Stränge zerkleinert.

### Extrusion

Dabei kann die zu extrudierende, Mischung der Komponenten a1) und a2) durch
i) separates Beschicken des Extruders mit den Komponenten a1) und a2) oder
ii) Beschicken des Extruders mit der Komponente a2) und Erzeugen der Komponente a1) durch Erwärmung und/oder durch den Energieeintrag der Förder- und/oder Scherelemente, insbesondere Schnecken des Extruders auf eine Temperatur, bei der ein Teil der Komponente a2) geschmolzen ist oder
iii) Beschicken des Extruders mit der Komponente a1) und Erzeugen der Komponente a2) durch Kühlung des Extruders auf eine Temperatur, bei der ein Teil der Komponente a1) erstarrt,
erhalten werden.

Für die Beschickung des Extruders mit der festen Komponente a2) werden an die feste Komponente a2) keine weiteren Bedingungen gestellt.

Für die Beschickung des Extruders mit dem geschmolzenen Material der Komponente a1) wird vorzugsweise die Schmelztemperatur des Materials oder eine bis zu 20, insbesondere eine bis zu 10 °C höhere Temperatur gewählt. Sofern die Komponente a1) weitere Inhaltsstoffe enthält, die die Schmelztemperatur der Komponente a1) unter die des Materials verschieben, kann auch diese verringerte Schmelztemperatur oder eine bis zu 20, insbesondere eine bis zu 10 °C höhere Temperatur gewählt werden. Dabei sollte die Temperatur der Schmelze der Komponente a1) mit der Temperatur der festen Phase der Komponente a2) in Abstimmung mit der Temperatur des Extruders und der inneren des Extruders erzeugten Reibungswärme so gewählt werden, dass während der Extrusion das Vorliegen beider Phasen sichergestellt ist.

Bei dem erfindungsgemäßen Verfahren wird vorzugsweise ein Gewichtsverhältnis der flüssigen Komponente a1) zu der festen Komponente a2) von 1:1 bis 1:2, insbesondere von 1:1.4 bis 1:1.7 gewählt.

Die Temperatur des Extruders kann dabei auch unterhalb der Schmelztemperatur des Materials liegen, da durch die Extrusion Reibungswärme, insbesondere durch die Förder- und/oder Scherlemente des Extruders, insbesondere der Schnecken, entsteht, die vorzugsweise ausreicht wenigstens einen Teil des Material in der Schmelze zu halten.

Als Extruder können Einschnecken-, Doppelschnecken- oder Planetenextruder verwendet werden. Die Doppelschneckenextruder können mit Förderelementen als auch zusätzlichen Mischelementen ausgestattet sein.

### Ein bevorzugter Extruder ist ein Doppelschneckenextruder

Am Ende des Plastifizierprozesses durch den Extruder wird die resultierende Paste, die vorzugsweise die Schmelztemperatur der Mischung, enthaltend die Komponenten a1) und a2) besitzt, dann durch eine Lochplatte zu Strängen gepresst.

Bevorzugt, enthält die Paste wenigstens 80 Gew.-%, vorzugsweise wenigstens 90 Gew.-% des Materials.

### Zerkleinerung

Die Lochplatte kann dabei ein oder mehrere Öffnungen (Löcher) aufweisen. Vorzugsweise besitzt die Lochplatte 1 bis 20 Öffnungen, insbesondere runde Öffnungen, vorzugsweise mit einem Durchmesser von 0.1 bis 20 mm, insbesondere von 0.3 bis 0.8 mm.

Die sich bildenden Stränge werden im Anschluss zerkleinert.

Besonders vorteilhaft ist es, den aus der Lochplatte austretenden Strang durch ein rotierendes Messer in kleine Partikel zu zerteilen und diese Teilstücke dann über einen trockenen Luftstrom oder ein Inertgas abzukühlen, bis die Oberflächen nicht mehr klebrig sind und die Einzelpartikel bei Kontakt untereinander nicht verkleben. Nach entsprechender Abkühlung ist es möglich, die Partikel in größeren Gebinden zu sammeln und abzusacken.

Die Feststoffpartikel nach dem erfindungsgemäßen Verfahren haben bevorzugt eine Teilchengröße von 0.2 bis 30 mm, insbesondere von besitzen 0.2 bis 20 mm. Insbesondere sind die erhaltenen Partikel von sphärischer Gestalt mit einem Aspektverhältnis von 1 bis 3, vorzugsweise von 1 bis 1.8, insbesondere von 1 bis 1.4. Sie können auch eine zylindrische Form besitzen, vorzugsweise mit einem Durchmesser von 0.2 bis 30 mm, insbesondere 0.2 bis 20 mm und einer Länge von 0.3 bis 30 mm.

Alternativ kann auch ein sogenannter Flüssigabschlag analog zur klassischen Unterwassergranulierung eingesetzt werden, wobei Wasser für feuchtigkeitsempfindliche Materialien, wie zyklische Amiden, wie Caprolactam vorzugsweise nicht in Frage kommt. Für derartige Materialien können als flüssige Medien alle Medien verwendet werden, die wasserfrei sind und keine CH-aciden Gruppen aufweisen, beispielsweise unter Druck verflüssigtes CO₂.

### Material

Als Material wird vorzugsweise eines mit einem Schmelzpunkt bei Normaldruck von 50 bis 250 °C, insbesondere von 50 bis 160 °C eingesetzt.

Ebenfalls bevorzugt ist ein Material das nicht-polymer ist. Gleichfall bevorzugt ist ein Material mit einem Molekulargewicht von kleiner 1000 g/mol, vorzugsweise kleiner 500 g/mol.

Besonders bevorzugte Materialien besitzen in geschmolzener Form bei ihrer Schmelztemperatur unter Normaldruck eine Viskosität von kleiner 1x10⁴ Pa·s.

Ganz besonders bevorzugtes Material ist ein zyklisches Amid der Komponente, vorzugsweise ein Amid der allgemeinen Formel (I) eingesetzt, 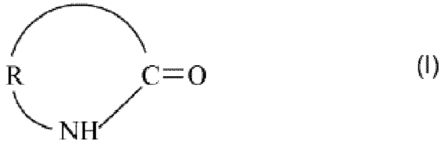 wobei R für eine C3-C13-Alkylengruppe, insbesondere für eine C5-C11-Alkylengruppe steht.

Als zyklische Amide eignen sich insbesondere Lactame der Formel (I), wie ε-Caprolactam, 2-Piperidon (δ-Valerolactam), 2-Pyrrolidon (y-Butyrolactam), Önanthlactam, Lauryllactam, Laurinlactam oder deren Mischungen. Bevorzugt steht das zyklisches Amid für Caprolactam, Lauryllactam oder deren Mischungen. Besonders bevorzugt wird als Material ausschließlich Caprolactam oder ausschließlich Lauryllactam eingesetzt.

Bei dem erfindungsgemäßen Verfahren können die Komponenten a1) und a2) jeweils unabhängig voneinander neben dem Material weitere Inhaltsstoffe enthalten. Als bevorzugte Inhaltsstoffe für den Fall, dass das Material ein zyklisches Amid, insbesondere Caprolactam, Lauryllactam oder deren Mischungen ist, sind die für die anionische Caprolactampolymerisation üblichen Katalysatoren und/oder Aktivatoren zu nennen.

Diese Inhaltsstoffe können auch während der Extrusion über separat dem Verfahren zugegeben. Eine solche Zugabe erfolgt bevorzugt im Einzugsbereich des Extruders beispielsweise über Mischelemente, um vorzugsweise eine homogene Verteilung dieser Additive zu erzielen.

Im Hinblick auf die Mitverwendung von Aktivatoren oder Katalysatoren bei zyklischen Amiden als Material ist das Verfahren bevorzugt, bei dem jeweils wenigstens ein Aktivator oder wenigstens ein Katalysator eingesetzt wird.

Der Katalysator zur Polymerisation des zyklischen Amids wird vorzugsweise ausgewählt aus der Gruppe, bestehend aus Natriumcaprolactamat, Kaliumcaprolactamat, Bromid-Magnesium-capro-lactamat, Chlorid-Magnesium-caprolactamat, Magnesium-bis-Caprolactamat, Natriumhydrid, Natrium, Natriumhydroxid, Natriummethanolat, Natriumethanolat, Natriumpropanolat, Natrium-butanolat, Kaliumhydrid, Kaliumhydroxid, Kaliummethanolat, Kalium-ethanolat, Kaliumpropanolat und Kaliumbutanolat, bevorzugt aus der Gruppe bestehend aus Natriumhydrid, Natrium und Natriumcaprolactamat, besonders bevorzugt Natriumcaprolactamat.

Das Molverhältnis von zyklischem Amid zu Katalysator kann in weiten Grenzen variiert werden, es beträgt in der Regel 1: 1 bis 10000: 1, bevorzugt 5: 1 bis 1000: 1, besonders bevorzugt 1: 1 bis 500: 1.

Bevorzugt enthält die zu extrudierende Mischung
- 96 bis 99,9 Gew.% wenigstens eines zyklischen Amids, insbesondere 97 bis 99,9 Gew.%, besonders bevorzugt 97,5 bis 99,5 Gew.-% und
- 0,1 bis 4,0 Gew.% mindestens eines Katalysators, bevorzugt 0,1 bis 3 Gew.-%, besonders bevorzugt 0,5 bis 2,5 Gewichtsteile mindestens eines Katalysators,
jeweils bezogen auf das Gesamtgewicht der Mischung.

Als Aktivatoren eignen sich unter anderem aliphatische Diisocyanate, wie Butylendiisocyanat, Hexamethylendiisocyanat, Octamethylendiisocyanat, Decamethylendiisocyanat, Undecamethylen-diisocyanat, Dodecamethylendiisocyanat, 4,4'-Methylenbis(cyclohexylisocyanat), Isophorondiiso-cyanat, aromatische Diisocyanate, wie Toluyidiisocyanat, 4,4'-Methylenbis(phenyl)-isocyanat oder Polyisocyanate (z. B. Isocyanate von Hexamethylendiisocyanat), Allophanate (z. B. Ethylallophanat). Insbesondere können Mischungen der genannten Verbindungen als Aktivatoren eingesetzt werden.

Als Aktivatoren eignen sich weiterhin aliphatische Disäurehalogenide, wie Butylendisäurechlorid, Butylendisäurebromid, Hexamethylendisäurechlorid, Hexamethylendisäurebromid, Octamethylen-disäurechlorid, Octamethylendisäurebromid, Decamethylendisäurechlorid, Decamethylendi-säurebromid, Dodecamethylendisäurechlorid, Dodecamethylendisäurebromid, 4,4'-Methylenbis-(cyclohexylsäurechlorid), 4,4'-Methylenbis(cyclohexylsäurebromid), Isophoron-disäurechlorid, Isophorondisäurebromid als auch aromatische Disäurehalogenide, wie Toluylmethylendisäurechlorid, Toluylmethylendisäurechlorid, 4,4'-Methylen-bis(phenyl)säurechlorid, 4,4'-Methylenbis-(phenyl)-säurebromid. Insbesondere können Mischungen der genannten Verbindungen als Aktivatoren eingesetzt werden.

Insbesondere bevorzugt ist als Aktivator mindestens eine Verbindung, ausgewählt aus der Gruppe bestehend aus aliphatischen Polyisocyanaten, insbesondere Diisocyanaten, aromatischen Polyisocyanaten, insbesondere Diisocyanaten, aliphatischen Disäurehalogeniden und aromatischen Disäurehalogeniden. Bevorzugt werden die Polyisocyanate, insbesondere aliphatische Polyisocyanate, als geblockte Isocyanate eingesetzt.

In einer bevorzugten Ausführungsform wird als Aktivator mindestens eine Verbindung eingesetzt, die ausgewählt ist aus der Gruppe Hexamethylendiisocyanat, Isophorondiisocyanat, Hexamethylen-disäurebromid, Hexamethylendisäurechlorid und deren Mischungen. Besonders bevorzugt wird Hexamethylendiisocyanat als Aktivator der Komponente a1) eingesetzt, insbesondere als geblocktes Isocyanat. Geeignet als Aktivator ist beispielsweise ein Caprolactam-blockiertes 1,6-Hexamethylen-diisocyanat. Eine Lösung eines Caprolactam-blockierten 1,6-Hexa-methylendiisocyanats in Caprolactam ist kommerziell unter der Bezeichnung Brueggolen® C20 von der Firma Brueggemann oder Addonyl® 8120 der Firma Rhein Chemie Rheinau GmbH erhältlich.

Das Molverhältnis von zyklischem Amid zu Aktivator kann in weiten Grenzen variiert werden und beträgt in der Regel 1: 1 bis 10000: 1, bevorzugt 5: 1 bis 2000: 1, besonders bevorzugt 20: 1 bis 1000: 1.

Ebenfalls bevorzugt enthält die zu extrudierende Mischung
- 90 bis 99,8 Gew.% wenigstens eines zyklischen Amids, insbesondere 92 bis 99 Gew.%, besonders bevorzugt 97 bis 98,5 Gew.-% und
- 0,2 bis 10,0 Gew.% wenigstens eines Aktivators, insbesondere 1 bis 8 Gew.-%, besonders bevorzugt 1,5 bis 3 Gew.-%,
jeweils bezogen auf das Gesamtgewicht der Mischung.

Mit dem erfindungsgemäßen Verfahren lassen sich Feststoffpartikel mit einheitliche Masse und Form und mit sehr geringen Feinanteil herstellen. Die nach dem erfindungsgemäßen Verfahren erhaltenen Feststoffpartikel weisen zudem eine sehr gute Rieselfähigkeit auf und verkleben auch nicht bei längerer Lagerung.

### Beispiel 1:

| | |
|---|---|
| Verwendeter Extruder: | Doppelschneckenextruder (Leistritz ZSE 27 Maxx-480) |
| Heizzonen: | 11 (L/D: 48) |
| Lochplatte: | 1 konische Bohrungen mit 3.2 mm Durchmesser |
| Maschinenparameter: | Schneckendrehzahl: 80 UpM |
| Temperaturen: | Alle Zonen auf 68°C mit Ausnahme der Zone 1 (66°C) und Zone 11 (67°C) |

Die durch die Lochplatte der Granuliereinheit austretenden Stränge wurden durch eine mechanische Abschlageinheit abgeschlagen und nach einer Flugzeit in trockener Luft nach 1 - 3 Sekunden aufgefangen. In dieser Zeit waren die Partikel hinreichend abgekühlt, dass sie nicht verklebten.

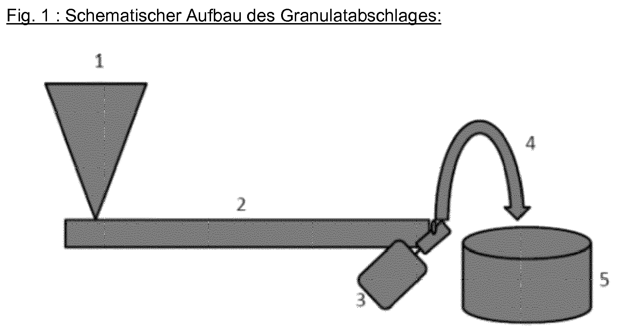

Die Verfahrensweise ist schematisch in Fig 1 dargestellt, wobei die einzelnen Komponenten folgende Bedeutung haben:
(1) Materialzuführung
(2) Extruder
(3) Handmixer mit Drahtkorb-Mischkopf
(4) Flugbahn der abgeschlagenen Paste-Partikel
(5) Auffangbehälter

Konkret wurden die austretenden Caprolactam Stränge mit Hilfe eines konventionellen Handmixers mit einem Drahtkorb-Rührer so abgeschlagen, dass sie in einer parabolischen Flugbahn in einem 2 m von der Düse entfernten Auffangbehälter landeten. Die 3-4 mm großen, weitgehend sphärischen oder zylindrischen Partikel wurde auf Raumtemperatur abgekühlt und konnten sehr auf Grund ihrer guten Rieselfähigkeit leicht umgeschüttet werden. Auch zeigten sich nach der Verpackung in Säcken und deren mechanischen Beanspruchung während der Lagerung eine sehr gute Stabilität hinsichtlich Verklebung. Es entstand zudem keinerlei Feinanteil.

Etwa 50 g jeder Mischung wurde in einem gasdichten Schraubglas verwahrt.

### Beispiel 2:

Wie Beispiel 1, als Einsatzstoff wurde aber eine Vormischung aus 96 Gew.-% Caprolactam und 4 Gew.-% Addonyl Kat N1 der Firma Rhein Chemie Rheinau GmbH (Natriumcaprolactamat 18 Gew.-%ig in Caprolactam) eingesetzt. Der Einzugsbereich des Extruders wurde mit Stickstoff inertisiert.

### Beispiel 3:

Wie Beispiel 1, als Einsatzstoff wurde aber eine Vormischung aus 98 Gew.-% Caprolactam und 2 Gew.-% Addonyl 8120 der Firma Rhein Chemie Rheinau GmbH (Caprolactam-geblocktes Hexamethylendiisocyanat mit einem Anteil von bis 2.5 Gew.-% Caprolactam) eingesetzt. Der Einzugsbereich des Extruders wurde mit Stickstoff inertisiert.

### Beispiel 4:

Wie Beispiel 1, als Einsatzstoff wurde aber eine Vormischung aus 93 Gew.-% Caprolactam, 2 Gew.-% Addonyl 8120 und 5 Gew.- % Addonyl 8112 (Kälteschlagzähmodifikator) der Firma Rhein Chemie Rheinau GmbH eingesetzt. Der Einzugsbereich des Extruders wurde mit Stickstoff inertisiert.

### Beispiel 5:

Nach einer Woche wurden die Behälter aus Beispiel 2 und 3 separat unter Vakuum aufgeschmolzen, die Schmelzen vereinigt und in ein auf 160°C temperiertes Becherglas gegossen.

Die anionische Polymerisation startete nach etwa 1 Minute und es konnte ein Polyamid 6 mit einem Restmonomergehalt von 1.2 Gew.-% hergestellt werden.

### Beispiel 6:

Nach einer Woche wurden die Behälter aus Beispiel 2 und 4 separat unter Vakuum aufgeschmolzen, die Schmelzen vereinigt und in ein auf 160°C temperiertes Becherglas gegossen.

Die anionische Polymerisation startete nach etwa 1 Minute und es konnte ein Polyamid 6 mit einem Restmonomergehalt von 1.4 Gew.-% hergestellt werden.

## Patentansprüche

1. Verfahren zur Herstellung von Feststoffpartikeln, enthaltend ein Material mit einem Schmelzpunkt bei Normaldruck von -20 bis 300 °C, **dadurch gekennzeichnet, dass** man eine Mischung enthaltend:
a1) das Material in geschmolzener Form und
a2) das Material in fester Form
mittels eines Extruders zu einer Paste vermischt, diese durch eine Lochplatte zu Strängen presst und die Stränge zerkleinert.

2. Verfahren gemäß Anspruch 1, **dadurch gekennzeichnet, dass** das Material einen Schmelz-punkt bei Normaldruck von 0 bis 300 °C , vorzugsweise von 50 bis 250 °C , insbesondere von 50 bis 160 °C besitzt.

3. Verfahren gemäß wenigstens einem der Ansprüche 1 bis 2, **dadurch gekennzeichnet, dass** das Material ein Molekulargewicht von kleiner 1000 g/mol besitzt.

4. Verfahren gemäß wenigstens einem der Ansprüche 1 bis 3, **dadurch gekennzeichnet, dass** das Material in geschmolzener Form bei der Schmelztemperatur unter Normaldruck eine Viskosität von kleiner 1x10⁴ Pa·s besitzt.

5. Verfahren gemäß wenigstens einem der Ansprüche 1 bis 4, **dadurch gekennzeichnet, dass** das Material ein zyklisches Amid, vorzugsweise Lauryllactam, Caprolactam oder deren Mischung ist.

6. Verfahren gemäß wenigstens einem der Ansprüche 1 bis 5, **dadurch gekennzeichnet, dass** die Paste wenigstens 80 Gew.-%, vorzugsweise wenigstens 90 Gew.-% Material enthält.

7. Verfahren gemäß wenigstens einem der Ansprüche 1 bis 6, **dadurch gekennzeichnet, dass** die Feststoffpartikel eine sphärische oder zylindrische Form besitzen.

8. Verfahren gemäß wenigstens einen der Ansprüche 1 bis 7, **dadurch gekennzeichnet, dass** die Feststoffpartikel eine Größe von 0.2 bis 20 mm besitzen.

9. Verfahren gemäß wenigstens einem der Ansprüche 1 bis 8, **dadurch gekennzeichnet, dass** das Verhältnis von a1) zu a2) in der Mischung von 1 : 1 bis 1 : 4, insbesondere von 1: 1 bis 1 : 2 und insbesondere von 1: 1.4 bis 1 : 1.7 beträgt.

10. Verfahren gemäß wenigstens einem der Ansprüche 1 bis 9, **dadurch gekennzeichnet, dass** die Zerkleinerung mittels mechanischer Kraft erfolgt.

11. Verfahren gemäß wenigstens einem der Ansprüche 1 bis 10, **dadurch gekennzeichnet, dass** die Mischung einen Katalysator oder einen Aktivator enthält.

12. Verfahren gemäß wenigstens einem der Ansprüche 1 bis 11, wobei man die Mischung von a1) und a2) durch
i) separates Beschicken des Extruders mit den Komponenten a1) und a2) oder
ii) Beschicken des Extruders mit der Komponente a2) und Erzeugen der Komponente a1) durch Erwärmung und/oder durch den Energieeintrag der Förder- und/oder Scherelemente, insbesondere Schnecken des Extruders auf eine Temperatur, bei der ein Teil der Komponente a2) geschmolzen ist oder
iii) Beschicken des Extruders mit der Komponente a1) und Erzeugen der Komponente a2) durch Kühlung des Extruders auf eine Temperatur, bei der ein Teil der Komponente a1) erstarrt,
erhält.
